(19) Europäisches Patentamt
European Patent Office
Office européen des brevets

(11) Publication number: 0 404 131 A2

(12) **EUROPEAN PATENT APPLICATION**

(21) Application number: 90111697.0

(22) Date of filing: 20.06.90

(51) Int. Cl.5: C07F 7/28, G03G 5/06

(30) Priority: 23.06.89 JP 161177/89

(43) Date of publication of application: 27.12.90 Bulletin 90/52

(84) Designated Contracting States: DE FR GB

(71) Applicant: KONICA CORPORATION
No. 26-2, Nishishinjuku 1-chome Shinjuku-ku
Tokyo(JP)

(72) Inventor: Watanabe, Kazumasa, c/o Konica Corporation
1, Sakuramachi
Hino-shi, Tokyo(JP)
Inventor: Kinoshita, Akira, c/o Konica Corporation
1, Sakuramachi
Hino-shi, Tokyo(JP)
Inventor: Hirose, Naohiro, c/o Konica Corporation
1, Sakuramachi
Hino-shi, Tokyo(JP)
Inventor: Itami, Akihiko, c/o Konica Corporation
1, Sakuramachi
Hino-shi, Tokyo(JP)

(74) Representative: Henkel, Feiler, Hänzel & Partner
Möhlstrasse 37
D-8000 München 80(DE)

(54) **Titanylphthalocyanine.**

(57) There is disclosed a titanylphthanocyanine crystal which comprises having peaks of at least at 9.6° ± 0.2° and 27.2° + 0.2 of Bragg angle 2$\theta$ in an X-ray diffraction spectrum obtained with characteristic X-ray of CuK$\alpha$ at a wavelength of 1.541 A, and the peak intensity at 9.6° ± 0.2° being 60 % or more of the peak intensity at 27.2° ± 0.2°.

EP 0 404 131 A2

# Titanylphthalocyanine

## BACKGROUND OF THE INVENTION

This invention relates to a titanylphthalocyanine under a novel crystalline state excellent in photoelectric converting efficiency. The novel titanylphthalocyanine described in the present invention has remarkably higher photoelectric converting efficiency as compared with those known in the art, and therefore can be used for electrophotographic photosensitive members, particularly electrophotographic photosensitive member having high sensitivity to a semiconductor laser beam and a light emission diode (LED) beam, and also is useful as the photoelectric converting material in photoelectric converting device such as solar batteries, etc.

Phthalocyanine compounds have been known as pigments or photoelectric converting materials for a long time, and in recent years are attracting attention as materials for electrophotographic photosensitive members, and some electrophotographic photosensitive members by use of phthalocyanine have been known. Particularly, in titanylphthalocyanine, a large number of crystal forms are disclosed in Japanese Provisional Patent Publications No. 239248/1986, No. 67094/1987 and No. 116158/1988, but all of these involve problems in sensitivity, potential stability to repeated uses, fogging in electrophotographic process by use of reversal developing, etc.

Also, even when limited to those having a peak of X-ray intensity at Bragg angle $2\theta$ of 27.2° of the X-ray diffraction spectrum to the $CuK\alpha$ characteristic X-ray (wavelength 1.541 Å), the II type titanylphthalocyanine described in Japanese Provisional Patent Publication No. 67094/1987 is inferior in chargeability and also low in sensitivity. One described in Japanese Provisional Patent Publication No. 17066/1989 exhibits a great peak at 27.3°, and otherwise have small peaks at 9.5°, 9.7°, 11.7°, 15.0°, 23.5°, 24.1°, and also has high sensitivity. However, in view of higher speed-up in reversal developing or electrophotographic process, one having higher sensitivity with still better charging characteristics, and further improved in repeated use characteristics has been demanded.

As another field for which photoelectric converting characteristics are attracting attention, there is electric conversion of solar energy. As the photoelectric converting material for such purpose in the prior art, there have been employed inorganic photoconductive substances such as gallium/arsenic, cadmium sulfide/cadmium telluride or single crystal silicon, etc., but for preparation of a photoelectric converting device by use of these substances, it is necessary to form a layer while effecting crystallization by use of the hot CVD method, the thermal lift-up method, etc., whereby the preparation steps become complicated and unstable to require a long time, resulting in high cost. Accordingly, in recent years, a photoelectric converting device by use of amorphous silicon which can be prepared relatively easily as the photoelectric converting material has been proposed.

For example, Japanese Provisional Utility Model Publication No. 9864/1982 and Japanese Provisional Patent Publications No. 95873/1983 and No. 168056/1988 propose solar batteries by use of amorphous silicon as mentioned above.

However, for preparation of the photoelectric converting device by use of amorphous silicon as mentioned above, a large scale installation for the glow discharge method, the sputtering method, the vapor deposition method, etc. is required, and particularly preparation of a photoelectric converting device of large area is high in cost to be substantially factually unpractical.

In contrast, in the case of a device by use of an organic pigment, because it can be prepared by coating a pigment dispersed in an appropriate solvent, the preparation cost is low, and also it has the advantage that a device with large area can be prepared with extreme ease.

For such reasons, studies have been done for using organic pigments, and it has been attempted to use phthalocyanine compounds, but no practical application has been achieved, and development of a novel organic material excellent in photoelectric converting efficiency and stability has been awaited under the present situation.

## SUMMARY OF THE INVENTION

An object of the present invention is to provide a novel material excellent in photoelectric converting characteristics.

Another object of the present invention is to provide a novel crustalline form titanylphthalocyanine suitable for excellent electrophotographic photosensitive member which has high sensitivity and small residual potential, and also stable in potential characteristics even in repeated uses.

Still another object of the present invention is to provide a novel titanylphthalocyanine suitable for electrophotographic photosensitive member having sufficient sensitivity even to a long wavelength light source such as semiconductor laser, etc.

It is also another object of the present invention to provide a novel titanylphthalocyanine suitable for photoelectric converting device which is high in photoelectric conversion efficiency, easy of preparation and inexpensive.

More specifically, the present invention provides a titanylphthalocyanine crystal, which shows peaks at least at 9.6° ± 0.2° and 27.2° ± 0.2 of Bragg angle $2\theta$ in the X-ray diffraction spectrum to the CuKα characteristic X-ray (wavelength 1.541 Å), and the peak of the X-ray intensity at 9.6° ± 0.2° being 60 % or more of the peak of the X-ray intensity at 27.2° ± 0.2°.

## BRIEF DESCRIPTION OF THE DRAWING

Fig. 1, Fig. 2, Fig. 3, Fig. 4, Fig. 5 and Fig. 6 are respective sectional views showing specific examples of the layer constitution of photosensitive member which is a use of the present invention.

Fig. 7, Fig. 9, Fig. 10, Fig. 11, Fig. 12 and Fig. 13 are respective X-ray diffraction charts of the titanylphthalocyanines of the present invention obtained in Synthesis examples 1, 2, 3, 4, 5 and 6, respectively.

Fig. 8 is an IR-ray absorption spectrum chart of the titanylphthalocyanine in Synthesis example 1.

Fig. 14, Fig. 15 and Fig. 16 are respective X-ray diffraction charts of the titanylphthalocyanines obtained in Comparative synthesis examples 1, 2 and 3, respectively.

Fig. 17 is a schematic illustration showing how the peak intensity is determined, wherein the peak intentisy ratio = (Ha - Hc)/(Hb - Hc) and the base line at Hc is shown by a broken line.

## DESCRIPTION OF THE PREFERRED EMBODIMENTS

The titanylphthalocyanine of the present invention has a basic structure represented by the following formula:

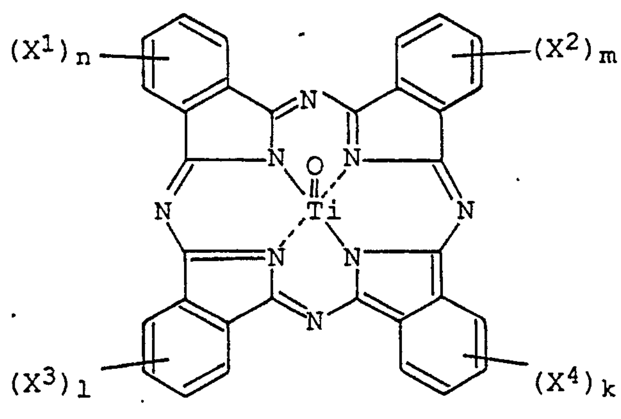

wherein $X^1$, $X^2$, $X^3$ and $X^4$ each represent hydrogen atom, a halogen atom such as fluorine atom and chlorine atom, an alkyl group, e,g having 1 to 4 carbon atoms or an alkoxy group, e.g. having 1 to 4 carbon atoms, and n, m, 1 and k represent integers of 0 to 4.

X-ray diffraction spectrum is measured under the following conditions.

The peak here refers to a distinct projected portion of sharp angle different from noise.

| | |
|---|---|
| X-ray bulb | Cu |
| Voltage | 40.0 KV |
| Current | 100.0 mA |
| Start angle | 6.0 deg. |
| Stop angle | 35.0 deg. |
| Step angle | 0.02 deg. |
| Measurement time | 0.50 sec. |

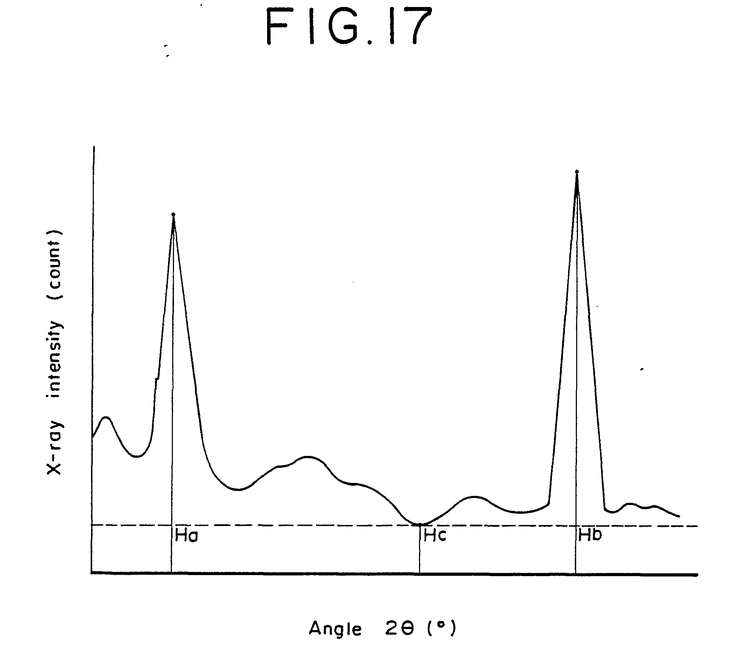

The X-ray diffraction spectrum thus measured generally includes an elevation of baseline depending on the surface state of the sample to be measured and the measurement device. Particularly, in the case of an organic polycrystalline sample, since the absolute value of the peak intensity is relatively smaller, the influence as mentioned above becomes serious, and it becomes necessary to correct the baseline. The peak intensities of the peaks at the diffraction angles 9.6° ± 0.2° and 27.2° ± 0.2° of the present invention are determined as described below. That is, in the region between 9.6° and 27.3°, a baseline is drawn by passing the point with the lowest X-ray intensity (generally appears at 20.5°), and the height from the baseline to the top of the peak is defined as the peak intensity (see Fig. 17).

The titanylphthalocyanine crystal of the present invention has a characteristic feature in intensity ratio of peaks in the X-ray diffraction spectrum. The titanylphthalocyanine having a peak intensity at 9.6° ± 0.2° being 60 % or more of the peak intensity at 27.2° ± 0.2 can be employed for whole photoelectric converting elements including a solar battery, but its effects are remarkably revealed when it is employed for an electrophotgraphy. That is, an electro-photoreceptor using the titanylphthalocyanine crystal of the present invention as described in Examples hereinbelow shows good chargeability in the electrophotographic pro cess, and its decay of surface potential is little in the dark and it shows high sensitivity when a light is irradiated. To the contrary, a photoreceptor prepared by using a titanylphthalocyanine having the peak intensity at 9.6° ± 0.2° being less than 60 % of the peak intensity at 27.2° ± 0.2° show not so good chargeability and low in sensitivity, and yet lowering in a potential at dark place or time is remarkably inferior to that of the present invention.

The titanylphthalocyanine of the present invention can be prepared according to the methods well known in the art. Although not limited to this method, the reaction of titanium tetrachloride and phthalodinitrile is carried out in an inert high boiling solvent such as α-chloronaphthalene, etc. The reaction is carried out at a temperature of 160 to 300 °C, generally at 160 to 260 °C. By hydrolyzing the dichlorotitaniumphthalocyanine obtained by this reaction with a base or water, the titanylphthalocyanine is obtained.

For obtaining the crystal form of the present invention, although not limited to the following description, the amorphous product obtained by pouring the titanylphthalocyanine after the above-mentioned hydrolysis directly or as a solution dissolved in sulfuric acid into water can be treated with an organic solvent immiscible with water (e.g. dichloroethane) in the presence of water.

As the device to be used for this treatment, in addition to stirring devices in general, homomixer, disperser, agitator, or ball mill, sand mill, attritor, etc. can be used.

In utilization of the present invention for electrophotographic photosensitive member, it is useful to use the titanylphthalocyanine as described above as the carrier generating substance based on its photoelectric conversion efficiency. In such electrophotographic photosensitive member, it is preferable to contain a carrier transporting substance for transporting efficiently the photogenerated carriers.

Also, in the present invention, in addition to the above titanylphthalocyanine, other carrier generating substance may be used in combination. As such carrier generating substance, in the first place, titanylphthalocyanines with crystal forms different from that of the titanylphthalocyanine of the present invention, such as the α-type, the β-type the α-, β-mixed type, amorphous type, etc., and also other phthalocyanine pigments, azo pigments, anthraquinone pigments, perylene pigments, polycyclic quinone pigments, squarium pigments, etc. may be included.

As the carrier transporting substance in the photosensitive member of the present invention, various substances can be employed, but representative examples may include compounds having nitrogen-containing heterocyclic ring nucleus and its fused ring nucleus as represented by oxazole, oxadiazole, thiazole, thiadiazole, imidazole, etc., polyarylalkane type compounds, pyrazoline type compounds, hydrazone type compounds, triarylamine type compounds, stryl type compounds, styryltriphenylamine type compounds, β-phenylstyryltriphenylamine type compounds, butadiene type compounds, hexatriene type compounds, carbazole type compounds, fused polycyclic compounds, etc. As specific examples of these

carrier transporting substances, a large number of substances, as represented by carrier transporting substances disclosed in Japanese Provisional Patent Publication No. 107356/1986 can be included, but the structures of particularly representative ones are shown below.

(1)

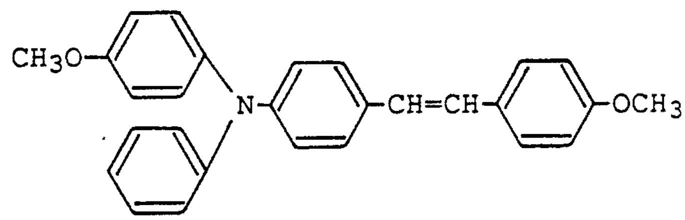

(2)

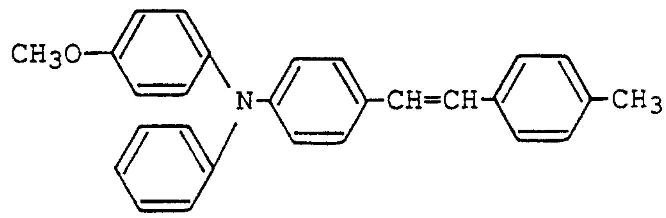

(3)

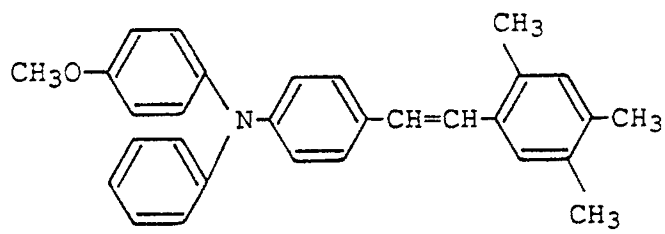

(4)

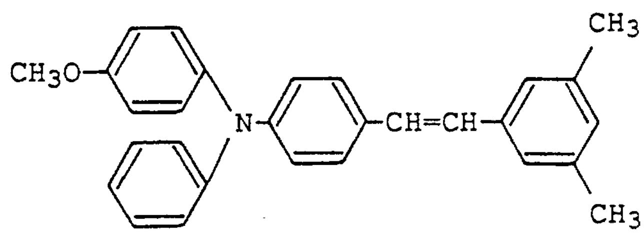

(5)

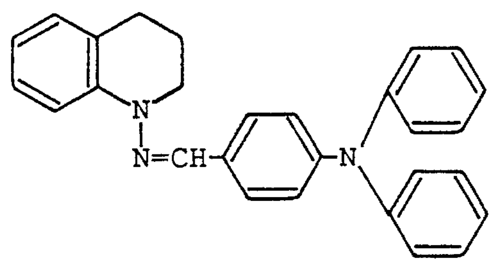

(6)

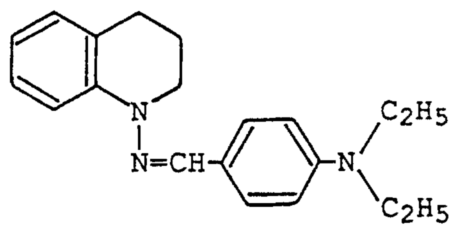

(7)

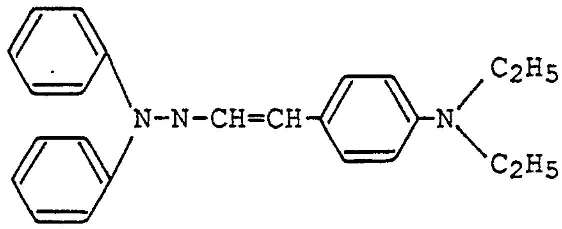

(8)

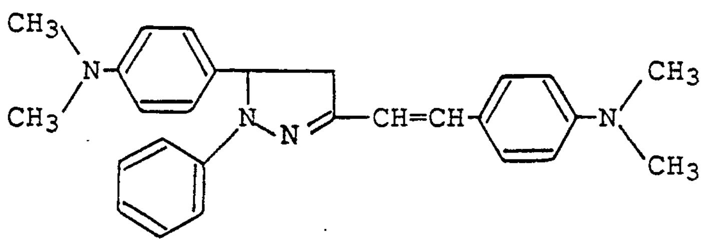

(9)

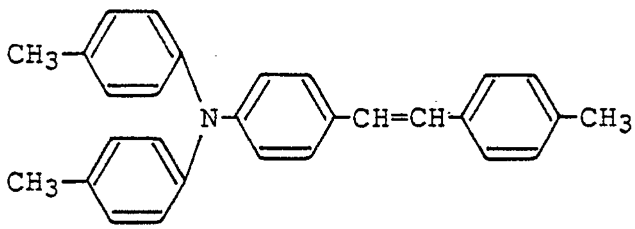

(10)

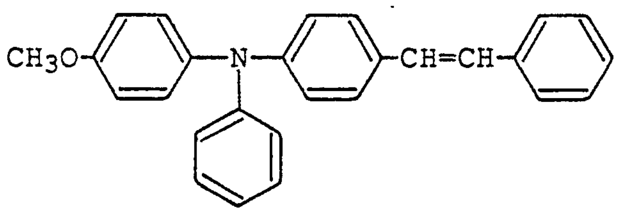

(11)

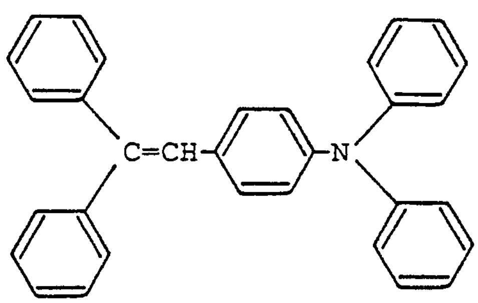

(12)

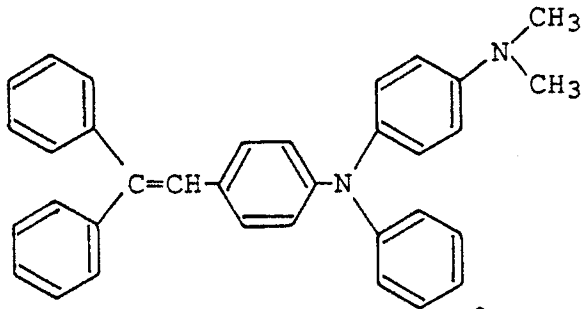

(13)

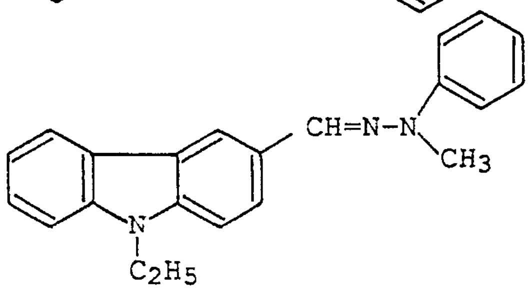

(14)

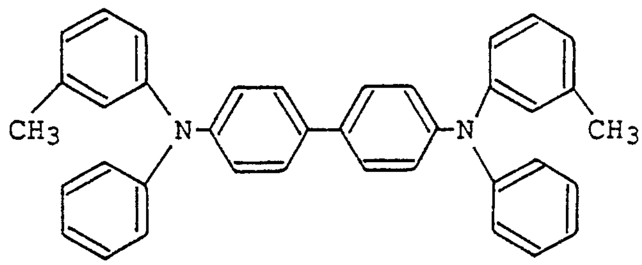

(15)

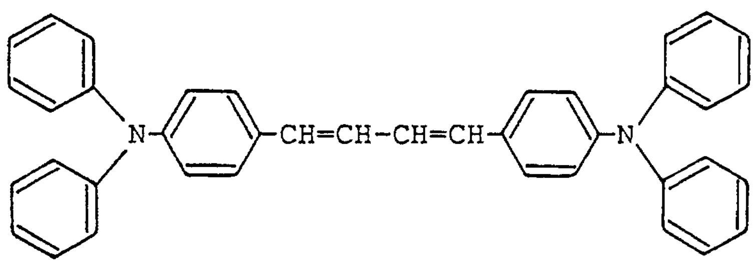

(16)

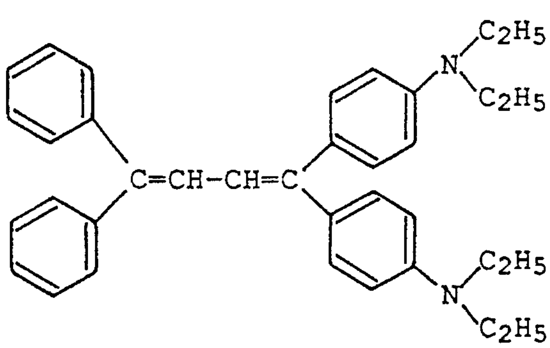

(17)

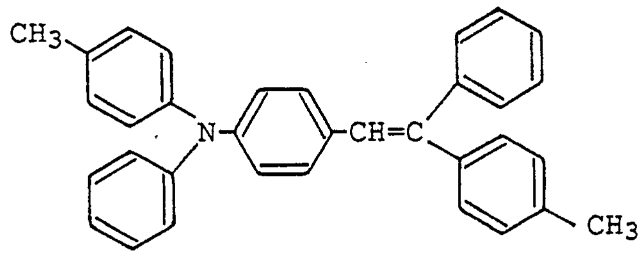

(18)

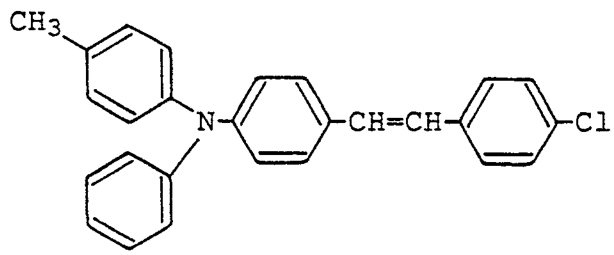

(19)

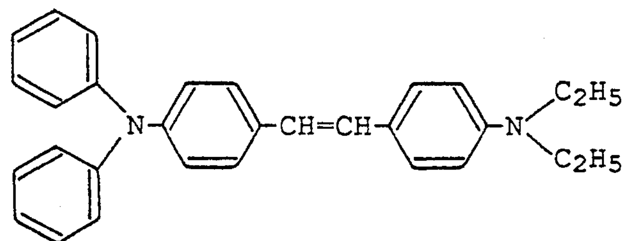

(20)

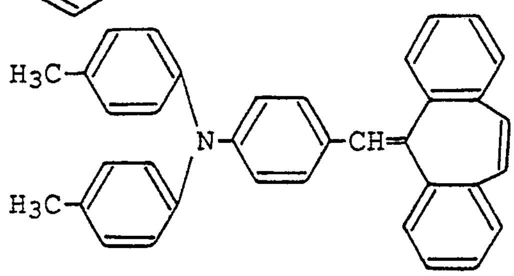

(21)

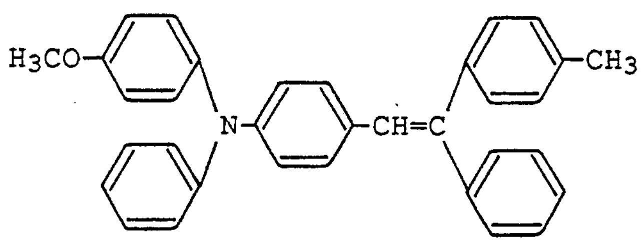

(22)

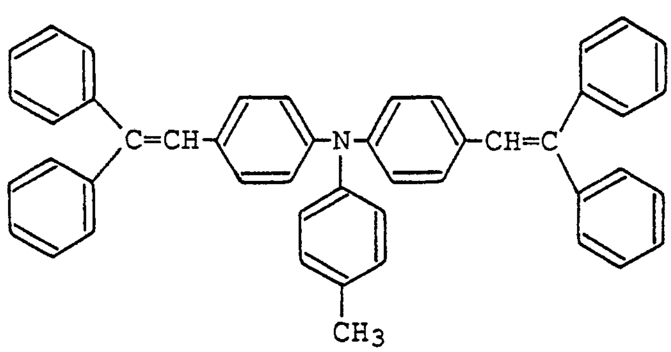

Various forms of constitutions of photosensitive members have been known. Although the photosensitive member of the present invention can take any one of those, but it should be preferably made a function separation type photosensitive member of the laminated type or the dispersed type. In this case, the constitution becomes generally as shown in Fig. 1 to Fig. 6. The layer constitution shown in Fig. 1 is formed by forming a carrier generating layer 2 on an electroconductive support 1 and laminating a carrier transporting layer 3 to form a photosensitive layer 4, Fig. 2 has a photosensitive layer 4′ with these carrier generating layer 2 and carrier transporting layer 3 being reversed. Fig. 3 has an intermediate layer provided between the photosensitive layer 4 and the electroconductive support 1 in the layer constitution in Fig. 1, and Fig. 4 an intermediate layer 5 provided between the photosensitive layer 4′ and the electroconductive support 1 in the layer constitution in Fig. 2. The layer constitution in Fig. 5 has a photosensitive layer 4″ containing a carrier generating substance 6 and a carrier transporting substance 7 formed, and Fig. 6 has an intermediate layer 5 provided between such photosensitive layer 4″ and the electroconductive support 1. On the most outer surface of the photosensitive member, a protectice layer (not shown) may be provided.

In formation of the photosensitive layer, the method of coating a solution of a carrier generating substance or a carrier transporting substance dissolved therein alone or together with a binder or additives is effective. However, also since carrier generating substances generally have low solubility, in such case, the method of coating a dispersion of fine particles of a carrier generating substance dispersed in an appropriate dispersing medium by use of sonication disperser, ball mill. sand mill, homomixer. etc. becomes effective. In this case, the binder and additives may be generally used as added in the dispersion.

As the solvent or the dispersing medium to be used for formation of the photosensitive member, broadly any desired one may be employed. For example, there may be included butylamine, ethylenediamine, N,N-dimethylformamide, acetone, methyl ethyl ketone, cyclohexanone, tetrahydrofuran, dioxane, ethyl acetate, butyl acetate, methyl cellosolve, ethyl cellosolve, ethylene glycol dimethyl ether, toluene, xylene, acetophenone, chloroform, dichloromethane, dichloroethane, trichloroethane, methanol, ethanol, propanol, butanol, etc.

When a binder is used for formation of the carrier generating layer, the carrier transporting layer or the photosensitive layer, any desired one may be chosen as the binder, but particularly a high molecular polymer which is hydrophobic and has film forming ability is desirable. Examples of such polymers can include the following, which are not limitative of the present invention:
polycarbonate, polycarbonate Z resin, acrylic resin, methacrylic resin, polyvinyl chloride, polyvinylidene chloride, polystyrene, styrene-butadiene copolymer, polyvinyl acetate, polyvinyl formal, polyvinyl butyral, polyvinyl acetal, polyvinyl carbazole, styrene-alkyd resin, silicone resin, silicone-alkyd resin, polyester, phenol resin, polyurethane, epoxy resin, vinylidene chloride-acrylonitrile copolymer, vinyl chloride-vinyl acetate copolymer, vinyl chloride-vinyl acetate-maleic anhydride copolymer.

The ratio of the carrier generating substance to the binder is desirably 10 to 600 % by weight, more preferably 50 to 400 % by weight. The ratio of the carrier transporting substance to the binder is desirably 10 to 500 % by weight. The thickness of the carrier generating layer may be made 0.01 to 20 $\mu$m, but more preferably 0.05 to 5 $\mu$m. The thickness of the carrier transporting layer may be made 1 to 100 $\mu$m, more preferably 5 to 30 $\mu$m.

In the above photosensitive layer, for the purpose of improving sensitivity, reducing residual potential or reducing fatigue during repeated uses, an electron receiving substance can be contained. Examples of such electron receiving substance may include compounds with great electrophilic force such as succinic anhydride, maleic anhydride, dibromosuccinic anhydride, phthalic anhydride, tetrachlorophthalic anhydride, tetrabromophthalic anhydride, 3-nitrophthalic anhydride, 4-nitrophthalic anhydride, pyromellitic anhydride, mellitic anhydride, tetracyanoethylene, tetracyanoquinodimethane, o-dinitrobenzene, m-dinitrobenzene, 1,3,5-trinitrobenzene, p-nitrobenzonitrile, picryl chloride, quinonechloroimide, chloranil, bromanil, dichlorodicyano-p-benzoquinone, anthraquinone, dinitroanthraquinone, 9-fluorenylidenemalonodinitrile, polynitro-9-fluorenylidenemalonodinitrile, pycric acid, o-nitrobenzoic acid, p-nitrobenzoic acid, 3,5-dinitrosalicylic acid, phthalic acid, mellitic acid and others. The ratio of the electron receiving substance added may be desirably 0.01 to 200, more preferably 0.1 to 100 based on weight of 100 of the carrier generating substance.

Also, for the purpose of improving storability, durability, environmental dependency resistance, a deterioration preventive agent such as antioxidant or light stabilizer can be contained in the above-mentioned photosensitive layer. As the compound to be used for such purpose, there may be effectively used, for example, couromanol derivatives and etherated compounds or esterified compounds thereof such as tocopherol, etc., polyarylalkane compounds, hydroquinone derivatives and mono- and di-etherated compounds thereof, benzophenone derivatives, benzotriazole derivatives, thioether compounds, phosphonic

acid esters, phosphorous acid esters, phenylenediamine derivatives, phenol compounds, hindered phenol compounds, linear amine compounds, cyclic amine compounds, hindered amine compounds, etc. Specific examples of particularly useful compounds may include hindered phenol compounds such as "IRGANOX 1010", "IRGANOX 565" (all manufactured by Ciba-Geigy), "Sumilizer BHT", "Sumilizer MDP" (all manufactured by Sumitomo Kagaku), etc., hindered amine compounds such as "Sanol LS-2626", "Sanol LS-622 LD" (all manufactured by Sankyo), etc.

As the binder to be used in the intermediate layer, the protective layer, etc., those mentioned for use in the carrier generating layer and the carrier transporting layer as described above can be employed, or otherwise there may be effectively employed polyamide resins, nylon resins, ethylenic resins such as ethylene-vinyl acetate copolymer, ethylene-vinyl acetate-maleic anhydride copolymer, ethylene-vinyl acetate-methacrylic acid copolymer, etc., polyvinyl alcohol, cellulose derivatives, etc.

As the electroconductive support, metal plates, metal drums can be employed, or otherwise those having thin layers of electroconductive compounds such as electroconductive polymers, indium oxide, etc. or metals such as aluminum, palladium, etc. provided on substrates such as papers, plastic films, etc. by such means as coating, vapor deposition, lamination, etc. can be used.

Next, as another use of the present invention, photoelectric converting devices in general to be used for solar batteries, etc. are to be described.

In preparation of the device, the titanylphthalocyanine is dispersed in an appropriate solvent, with addition of binder, carrier transporting substance, sensitizer, durability enhancer, etc. if necessary, and coated on an electrode to form a photoelectric converting layer, and further providing an electrode layer thereon to form a photoelectric converting cell. Alternatively, by providing an n-type semiconductor layer or a p-type semiconductor layer between the photoelectric converting layer and the electrode, the device having p-n junction formed with the photoelectric converting layer may be also prepared. Preferably, high photoelectric conversion efficiency can be obtained by provision of a junction with an n-type semiconductor layer. In such case, first a pigment dispersion obtained by dispersing the above titanylphthalocyanine in an appropriate solvent, with addition of, if necessary, binder resin, carrier transporting substance, sensitizer, durability enhancer, etc., is coated on the back electrode to form a p-type organic semiconductor layer ohmic junctioned with said electrode. On the above p-type organic semiconductor layer thus obtained is formed an n-type inorganic or organic semiconductor layer by, for example, the coating method, the electrodeposition method, the vacuum vapor deposition method, the Langmuir-Blodgett method, etc. to form a p-n junction at the interface between the both semiconductor layers.

Next, on the above N-type semiconductor layer is formed a light-transmissive front electrode by, for example, the vapor deposition method, the electrodeposition method, etc. to give the desired photoelectric converting device of the present invention.

As an another method, an n-type semiconductor layer may be formed by ohmic junction on a light-transmissive front electrode, and further a p-type organic semiconductor layer having the titanylphthalocyanine pigment with the specific crystal form as described above dispersed and contained in a binder resin is laminated thereon to form a pn junction, followed finally by vapor deposition of a metal with great work function such as Au, Ag, Pt, etc. on the above p-type organic semiconductor layer to form an ohmic junction, thereby obtaining the above device.

Between the above respective layers and between the respective layers and the electrodes, for enhancing adhesiveness or improving the junction region, intermediate layers can be provided. Also, for the purpose of enhancing the conversion efficiency, the method of providing a carrier transporting layer adjacent to the p-type organic semiconductor layer or the n-type semiconductor layer to prevent carrier recombination can be effectively employed.

The method of dispersing the titanylphthalocyanine and the resins for binder of the device, electrode substances, etc. may be the same as those used for formation of the electrophotographic photosensitive member as described above. Also, when a carrier transporting substance for preventing recombination of carriers and promoting movement of carriers is employed, or also when another photoconductive substance is employed for the purpose of sensitization or control of the photosensitive wavelength region, the same carrier transporting substance and carrier generating substance as in the case of electrophotographic photosensitive member can be used. Also, as the binder for the titanylphthalocyanine in the photoelectric converting device here, those having a volume resistivity of $10^{12}$ Ω•cm or less are desirable.

The photosensitive member by use of the titanylphthalocyanine of the crystal form of the present invention has a constitution as described above, and is excellent in charging characteristics, sensitivity characteristics, repetition characteristics, as is also apparent from the following Examples.

Synthesis example 1

Into a mixture of 65 g of phthalodinitrile and 500 ml of α-chloronaphthalene was added dropwise 14.7 ml of titanium tetrachloride under nitrogen gas stream, and then the temperature was raised gradually up to 200 °C, and the mixture was stirred while maintaining the reaction temperature between 200 and 220 °C for 3 hours to complete the reaction. Then, the mixture was left to cool, and when cooled to 130 °C filtered during hot, washed with α-chloronaphthalene to give a crude product of dichlorotitaniumphthalocyanine. The product was washed several times with methanol, and further several times with hot water of 80 °C. The crystals obtained were dried, and 5 g of the crystals was stirred in 100 g of 96 % sulfuric acid at 3 to 5 °C, followed by filtration, and the sulfuric acid solution obtained was poured into 3.5 l of water. The crystals precipitated were recovered by filtration, washed repeatedly with water until the washing became neutral, then recovered by filtration and the wet cake was treated with dichloroethane and washed with methanol, followed by drying, to give the crystals of the present invention.

The crystals as shown in Fig. 7 exhibit a Bragg angle 2θ with a ratio of the peak at 9.6° to that at 27.2° of 83 %.

Also, by use of KBr tablet as a cell substance, IR-ray absorption spectrum of the crystalline compound obtained in this synthesis example was measured to be as shown in Fig. 8.

Synthesis example 2

The wet cake obtained in Synthesis example 1 was treated with chloroform in place of dichloroethane to obtain the crystal of the present invention.

The crystal has main peaks at 7.5°, 9.6° and 27.2° as shown in Fig. 9. Among them, the peak intensity at 9.6° of Bragg angle 2θ is 87 % of that at 27.2°.

Synthesis example 3

The wet cake obtained in Synthesis example 1 was treated with anisole in place of dichloroethane to obtain the crystal of the present invention.

The crystal has a peak intensity ratio: 9.6°/27.2° = 80 % as shown in Fig. 10.

Synthesis example 4

Into a mixture of 130 g of phthalodinitrile and 800 ml of α-chloronaphthalene was added dropwise in nitrogen gas stream 28.2 ml of titanium tetrachloride at 120 °C, and the temperature was raised up to 210 °C to carry out the reaction at 210 to 220 °C for 4 hours. After left to cool overnight, the mixture was filtered, washed with α-chloronaphthalene to obtain crude dichlorotitaniumphthalocyanine product, which was washed with chloroform and then with methanol. Further, the product was hydrolyzed by heating in 2 liters of ammonia water at 70 °C for 5 hours, and washed with water to obtain a crude product. Of the product, 15 g was stirred in 500 g of sulfuric acid at 0 to 5 °C, then filtered and poured into 5 liters of water. The crystals precipitated were recovered by filtration, washed with water until the washing became neutral, then recovered by filtration and the wet cake was treated with o-dichlorobenzene to give the crystal of the present invention.

The crystal has a peak intensity ratio: 9.5°/27.2° = 65 % as shown in Fig. 11.

Synthesis example 5

The wet cake obtained in Synthesis example 4 was treated with fluorobenzene in place of o-dichlorobenzene to obtain the crystal of the present invention.

The crystal has a peak intensity ratio: 9.5°/27.2° = 80 % as shown in Fig. 12.

Synthesis example 6

The wet cake obtained in Synthesis example 4 was treated with 1,2,4-trichlorobenzene in place of o-dichlorobenzene to obtain the crystal of the present invention. The crystal has a peak intensity ratio: $9.5^\circ/27.2^\circ$ = 78 % as shown in Fig. 13.

Comparative synthesis example 1

In the same manner as described in Synthesis example 1, dichlorotitaniumphthalocyanine was prepared from phthalodinitrile and titanium tetrachloride, and this was hydrolyzed with hot water (the same as in Synthesis example 1 to this stage). The product was washed with methanol and dried to obtain the crystal of Comparative example 1.

The crystal has no distinct peak observed at $9.6^\circ$ as shown in Fig. 14.

Comparative synthesis example 2

The crystal immediately after hydrolysis as described in Comparative synthesis example 1 was treated in the wet paste as such with chlorobenzene, washed with methanol to obtain the crystal of Comparative example 2.

The crystal has a peak intensity ratio: $9.6^\circ/27.2^\circ$ = 29 % as shown in Fig. 15.

Comparative synthesis example 3

According to the method as described in Synthesis example 1, dichlorotitaniumphthalocyanine was synthesized from phthalodinitrile and titanium tetrachloride, and then hydrolyzed. The product (5 g) was dissolved in 200 g of sulfuric acid, poured into one liter of water to precipitate the crystals, which were then washed with water repeatedly until neutral. The wet cake was treated with dichloroethane to obtain the crystal of Comparative example 3.

The crystal has a peak intensity ratio: $9.6^\circ/27.2^\circ$ = 57 % as shown in Fig. 16.

The Comparative synthesis example 3 is only different in the acid paste treatment condition as compared with Synthesis example 1. That is, only the ratio of sulfuric acid to water is different in the step of dissolving the crude titanylphthalocyanine obtained by hydrolysis of dichlorotitaniumphthalocyanine in sulfuric acid and pouring the solution into water. However, due to such slight difference, the crystal form is different, whereby the electrophotographic characteristics become greatly different as described below.

Example 1

Three parts of the titanylphthalocyanine having an X-ray diffraction pattern in Fig. 7 obtained in Synthesis example 1, 35 parts of a silicone resin ("15 % xylene-butanol solution of KR-5240", manufactured by Shin-etsu Kagaku) as the binder resin and 100 parts of methyl ethyl ketone as the dispersing medium were dispersed by use of a sand mill, and the dispersion was coated on a polyester base having aluminum vapor deposited thereon by use of a wire bar to form a carrier generating layer with a film thickness of 0.2 µm. Subsequently, a solution containing 1 part of a carrier transporting substance (2), 1.3 parts of a polycarbonate resin "Yupilon Z200" (manufactured by Mitsubishi Gas Kagaku) and a minute amount of silicone oil "KF-54" (manufactured by Shin-etsu Kagaku) dissolved in 10 parts of 1,2-dichloroethane was coated by use of a blade coating machine, followed by drying to form a carrier transporting layer with a film thickness of 20 µm. The photosensitive member thus obtained is called Sample 1.

Example 2

A photosensitive member was obtained in the same manner as in Example 1 except for using phthalocyanine having an X-ray diffraction pattern in Fig. 9 obtained in Synthesis example 2 in place of the titanylphthalocyanine in Example 1. This is called Sample 2.

Example 3

Similarly, Sample 3 was prepared by use of the crystal in Fig. 10 obtained in Synthesis example 3.

Example 4

Similarly, Sample 4 was prepared by use of the crystal in Fig. 11 obtained in Synthesis example 4.

Example 5

Similarly, Sample 5 was prepared by use of the crystal in Fig. 12 obtained in Synthesis example 5.

Example 6

Similarly, Sample 6was prepared by use of the crystal in Fig. 13 obtained in Synthesis example 6.

Comparative example 1

Similarly, Comparative sample 1 was prepared by use of the crystal in Fig. 14 obtained in Comparative synthesis example 1.

Comparative example 2

Similarly, Comparative sample 2 was prepared by use of the crystal in Fig. 15 obtained in Comparative synthesis example 2.

Comparative example 3

Similarly, Comparative sample 3 was prepared by use of the crystal in Fig. 16 obtained in Comparative synthesis example 3.

Evaluation 1

The respective samples obtained as described above were evaluated as follows by use of a paper analyzer EPA-8100 (manufactured by Kawaguchi Denki). First, corona charging was effected for 5 seconds under the condition of - 80 $\mu$A, and the surface potential Va immediately after charging and the surface potential Vi after left to stand for 5 seconds were determined. Subsequently, exposure was effected to surface luminosity of 2 lux and the exposure dose $E_{1/2}$ necessary for making the surface potential 1/2 Vi and the exposure dose $E_{600/100}$ necessary for lowering the surface potential from - 600 V to - 100 V were determined. Also, the dark decay DD was determined from the formula of DD = 100 (Va-Vi)/Va (%). The results are shown in Table 1.

Evaluation 2

The respective samples obtained were also evaluated by use of a modified machine having a semiconductor laser source mounted on a printer LP-3010 (manufactured by Konica Corp.). Unexposed portion potential $V_H$ and exposed portion potential $V_L$ were determined, and further the difference $\Delta V_H$ between $V_H$ after repetition for 10,000 times and the initial $V_H$ was determined. The results are shown in Table 2.

Table 1

| Sample name | Va (V) | Vi (V) | DD (%) | $E_{\frac{1}{2}}$ (lux sec) | $E_{600/100}$ (lux sec) | Peak intensity ratio (%) |
|---|---|---|---|---|---|---|
| | | | | | | 9.6°/27.2° |
| Sample 1 | 1420 | 1108 | 22 | 0.81 | 1.04 | 83 |
| Sample 2 | 1350 | 972 | 28 | 0.80 | 1.03 | 87 |
| Sample 3 | 1370 | 1028 | 25 | 0.82 | 1.05 | 80 |
| Sample 4 | 1400 | 1036 | 26 | 0.78 | 1.02 | 65 |
| Sample 5 | 1380 | 1020 | 26 | 0.75 | 0.98 | 80 |
| Sample 6 | 1355 | 1010 | 25 | 0.80 | 1.01 | 78 |
| Comparative sample 1 | 870 | 392 | 55 | 3.50 | - | - |
| Comparative sample 2 | 1050 | 630 | 40 | 1.15 | 1.80 | 29 |
| Comparative sample 3 | 1170 | 749 | 36 | 1.08 | 1.13 | 57 |

From these results, it can be seen that the compounds of the present invention (Samples 1 - 6) have good chargeability (Va) and also good sensitivity ($E_{600/100}$). In contrast, although having a peak at the same 27.2°, Comparative sample 1 has no potential charged thereon, while Comparative samples 2 and 3, although relatively improved in sensitivity, have still greater in dark decay (DD). Particularly, by making the peak intensity ratio: 9.6°/27.2° 60 % or more based on the present invention (Sample 2), as compared with the case with the same intensity ratio of less than 60 % (Comparative sample 2), it is clearly excellent in all of chargeability, sensitivity and dark decay.

Table 2

| Sample name | $V_H$ (V) | $V_L$ (V) | $\Delta V_H$ (V) |
|---|---|---|---|
| Sample 1 | - 650 | - 30 | 20 |
| Sample 2 | - 630 | - 28 | 35 |
| Sample 3 | - 635 | - 30 | 27 |
| Sample 4 | - 640 | - 25 | 30 |
| Sample 5 | - 640 | - 28 | 30 |
| Sample 6 | - 635 | - 25 | 25 |
| Comparative Sample 1 | - 480 | - 90 | 100 |
| Comparative Sample 2 | - 580 | - 50 | 55 |
| Comparative Sample 3 | - 610 | - 40 | 58 |

Also in the repetition tests, the compounds of the present invention (Samples 1 - 6) are good, with $V_L$ - (V) being low and also little lowering in potential. In contrast, Comparative sample 3, although relatively good in receiving potential ($V_H$), $V_L$ shows a marked lowering of potential ($\Delta V_H$).

The titanylphthalocyanine of the present invention may be considered to assume inherently a crystal form exhibiting the peak intensities more conspicuous than other peaks at 27.2° and 9.6° as seen in Synthesis example 1 (Fig. 7). Also, one in Synthesis example 4 (Fig. 11) is somewhat weaker in the extent of crystal growth, and further Synthesis example 2 (Fig. 9) may be considered to be one in which peaks of other crystal forms other than the inherent peaks (e.g. peaks shown in Japanese Provisional Patent Publication No. 239248/1986) are included. However, all of these fall within the scope of the present

invention in the sense of development of peaks at 9.6° and 27.2°, and also exhibit excellent electrophotographic characteristics with high sensitivity and high potential, although slightly lowered as compared with Sample 1.

Example 7

Eight grams of a polycyclic quinone pigment having the structure shown below and 2 g of a resin Ethlec BX-1 (manufactured by Sekisui Kagaku) were thrown into 500 ml of 1,2-dichloroethane, dispersed by means of a sand mill and the dispersion was spinner coated on a Nesa glass and dried to form an n-type semiconductor layer with a thickness of 400 Å. The n-type semiconductor layer was made into ohmic junction with the Nesa electrode.

Polycyclic quinone pigment structural formula:

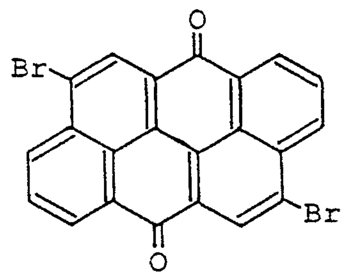

Subsequently, 8 g of the titanylphthalocyanine pigment having the X-ray diffraction spectrum in Fig. 7 obtained in Synthesis example 1 and 2 g of a binder resin A: nitrocellulose RS-60 (Dicel Kagaku Kogyo) having a volume resistivity of 1.3 x $10^{11}$ Ω•cm were dissolved and dispersed in 500 ml of a solvent isopropyl acetate, and the dispersion obtained was spinner coated on the above n-type semiconductor layer to form a p-type semiconductor layer having a thickness of 600 Å. At the interface between the n-type semiconductor layer and the P-type semiconductor layer as described above, a PN junction was formed. Subsequently, on the P-type semiconductor layer was deposited Au with a 300 Å thickness (effective area 0.5 $cm^2$) by the vacuum vapor deposition method, and with this as the back electrode, a plastic substrate with a thickness of 0.5 mm was adhered on said electrode to prepare a photoelectric converting device.

Photoelectric conversion efficiency was measured by irradiating a pseudo-sun light AM2 (75 $mW/cm^2$) as the light source on the device prepared and measuring the voltage-current characteristics at that time to determine the photoelectric conversion efficiency $\eta$, whereby a high value of $\eta$ = 1.63 (%) was obtained.

Example 8

On a glass substrate with a thickness of 0.5 mm was vacuum vapor deposited Ag to an effective area of 0.5 $cm^2$ and a thickness of 200 Å to form a back electrode, and a p-type organic semiconductor layer by use of the above titanylphthalocyanine pigment was formed on said electrode similarly as in Example 7.

Here, said semiconductor layer was made into ohmic junction with the back electrode. Next, on the above P-type semiconductor layer, a perylene pigment having the structure shown below was deposited to a thickness of 300 Å by vacuum vapor deposition to laminate an n-type semiconductor layer to form a pn junction at the interface with the above p-type semiconductor layer. Subsequently, according to the vacuum vapor deposition method, an ITO layer with a thickness of 400 Å was formed as the front electrode on the above n-type semiconductor layer to form an ohmic junction with the above n-type semiconductor layer. Further, a transparent plastic plate with a thickness of 0.5 mm was adhered thereon to prepare a photoelectric converting device. As the result of measurement of photoelectric conversion efficiency $\eta$ in the same manner as in Example 7, a high value of $\eta$ = 1.50 % was exhibited.

Structural formula of perylene pigment:

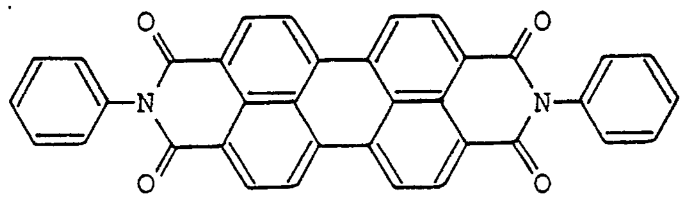

## Claims

1. A titanylphthalocyanine crystal, which comprises having peaks of at least at 9.6° ± 0.2° and 27.2° ± 0.2 of Bragg angle $2\theta$ in an X-ray diffraction spectrum obtained with characteristic X-ray of $CuK\alpha$ at a wavelength of 1.541 A, and the peak intensity at 9.6° ± 0.2° being 60 % or more of the peak intensity at 27.2° ± 0.2°.

2. The titanylphthalocycanine according to Claim 1, wherein said titanylphthalocyanine has the structure of

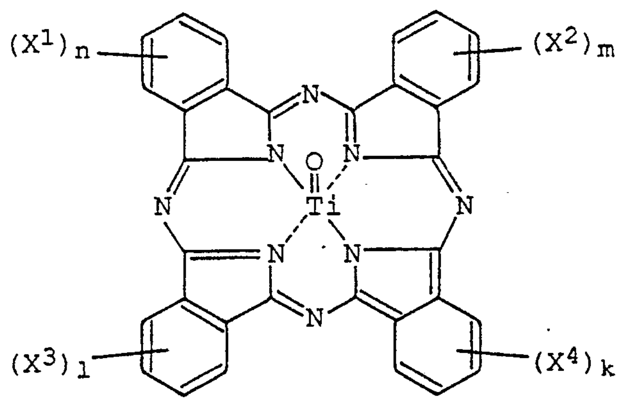

wherein $X^1$, $X^2$, $X^3$, $X^4$ each represent hydrogen atom, a halogen atom, an alkyl group having 1 to 4 carbon atoms or an alkoxy group having 1 to 4 carbon atoms, and n, m, 1 and k represent integers of 0 to 4.

3. A photoreceptor comprising a titanylphthalocyanine contained in a photosensitive layer, said titanylphthalocyanine being crystal and having peaks of at least at 9.6° ± 0.2° and 27.2° ± 0.2 of Bragg angle $2\theta$ in an X-ray diffraction spectrum obtained with characteristic X-ray of $CuK\alpha$ at a wavelength of 1.541 A, and the peak intensity at 9.6° ± 0.2° being 60 % or more of the peak intensity at 27.2° ± 0.2°.

4. The photoreceptor according to Claim 3 ,wherein said titanylphthalocyanine is repesented by the formula:

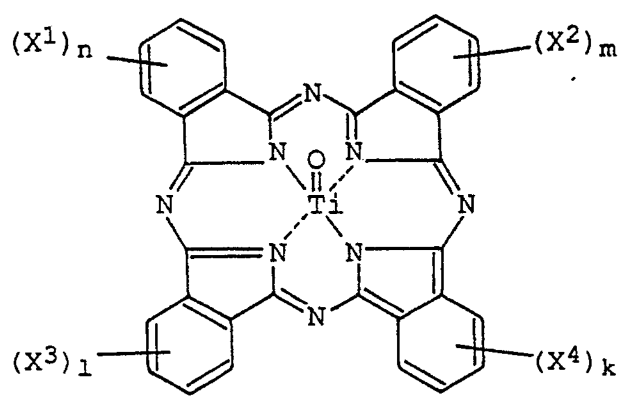

wherein $X^1$, $X^2$, $X^3$, $X^4$ each represent hydrogen atom, a halogen atom, an alkyl group having 1 to 4 carbon atoms or an alkoxy group having 1 to 4 carbon atoms, and n, m, 1 and k represent integers of 0 to 4,

FIG.1

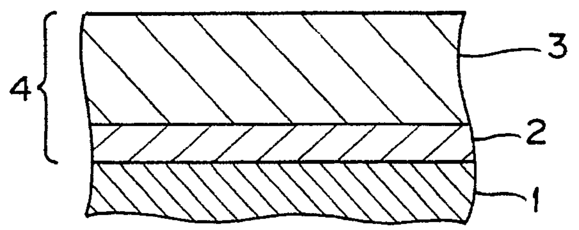


FIG.2

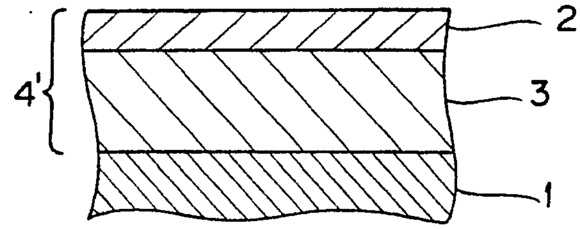


FIG.3

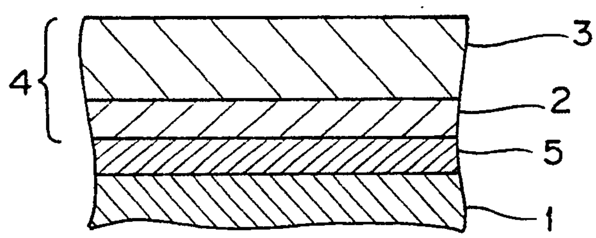


FIG.4

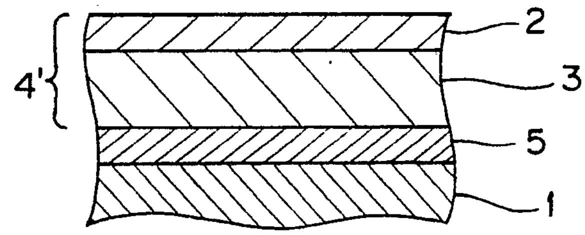


FIG.5

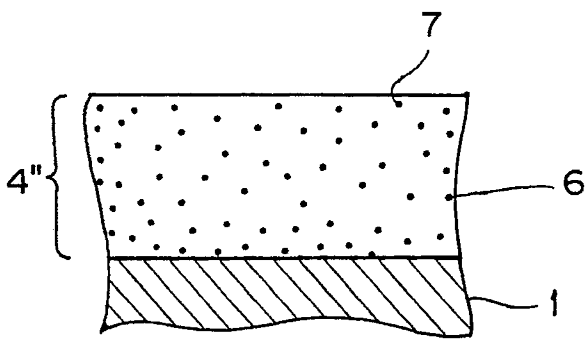


FIG.6

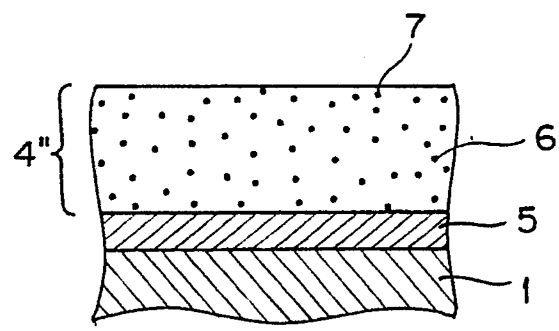

FIG.7

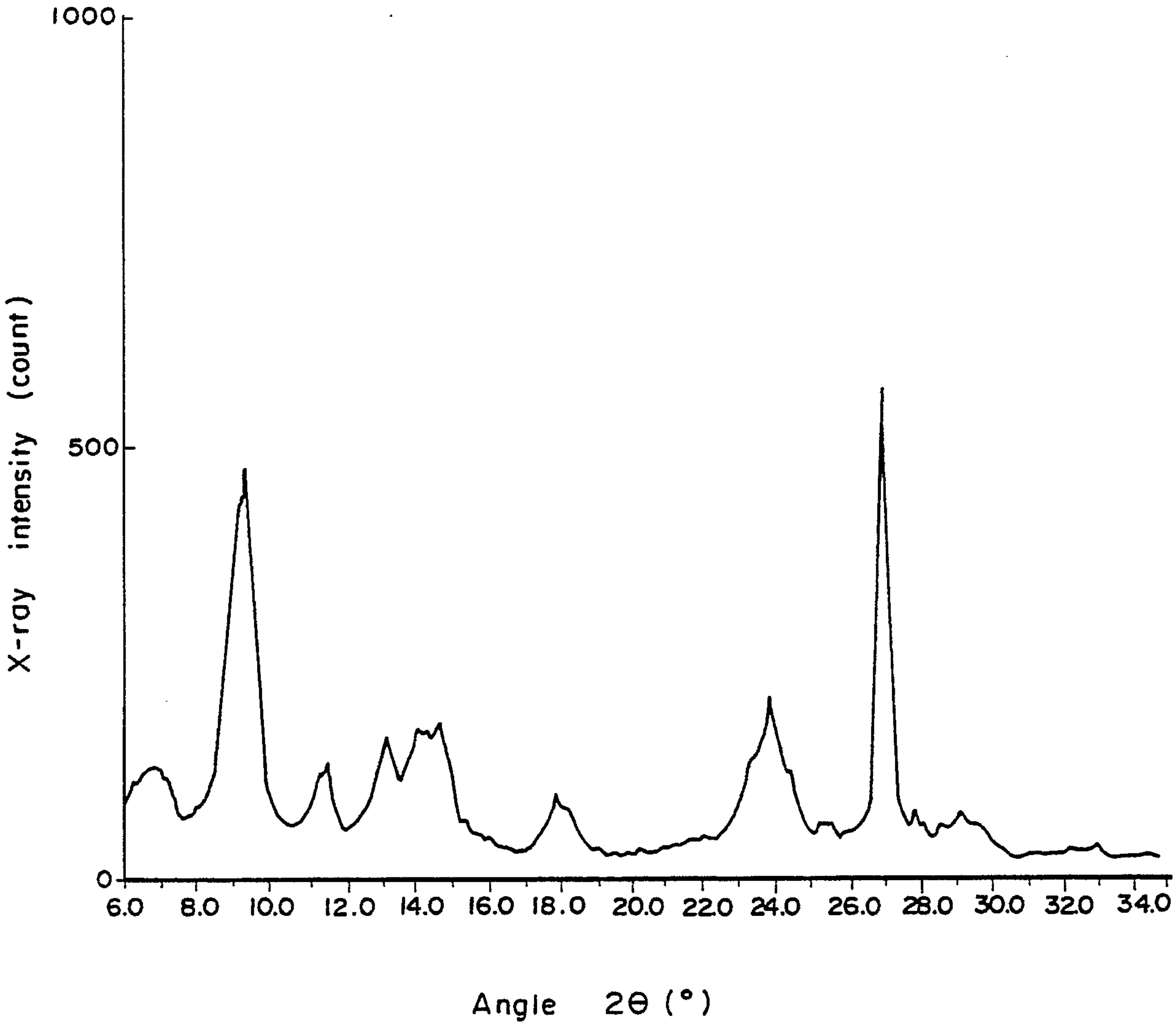
1000
500
0
X-ray intensity (count)
6.0 8.0 10.0 12.0 14.0 16.0 18.0 20.0 22.0 24.0 26.0 28.0 30.0 32.0 34.0
Angle 2θ (°)

FIG. 8

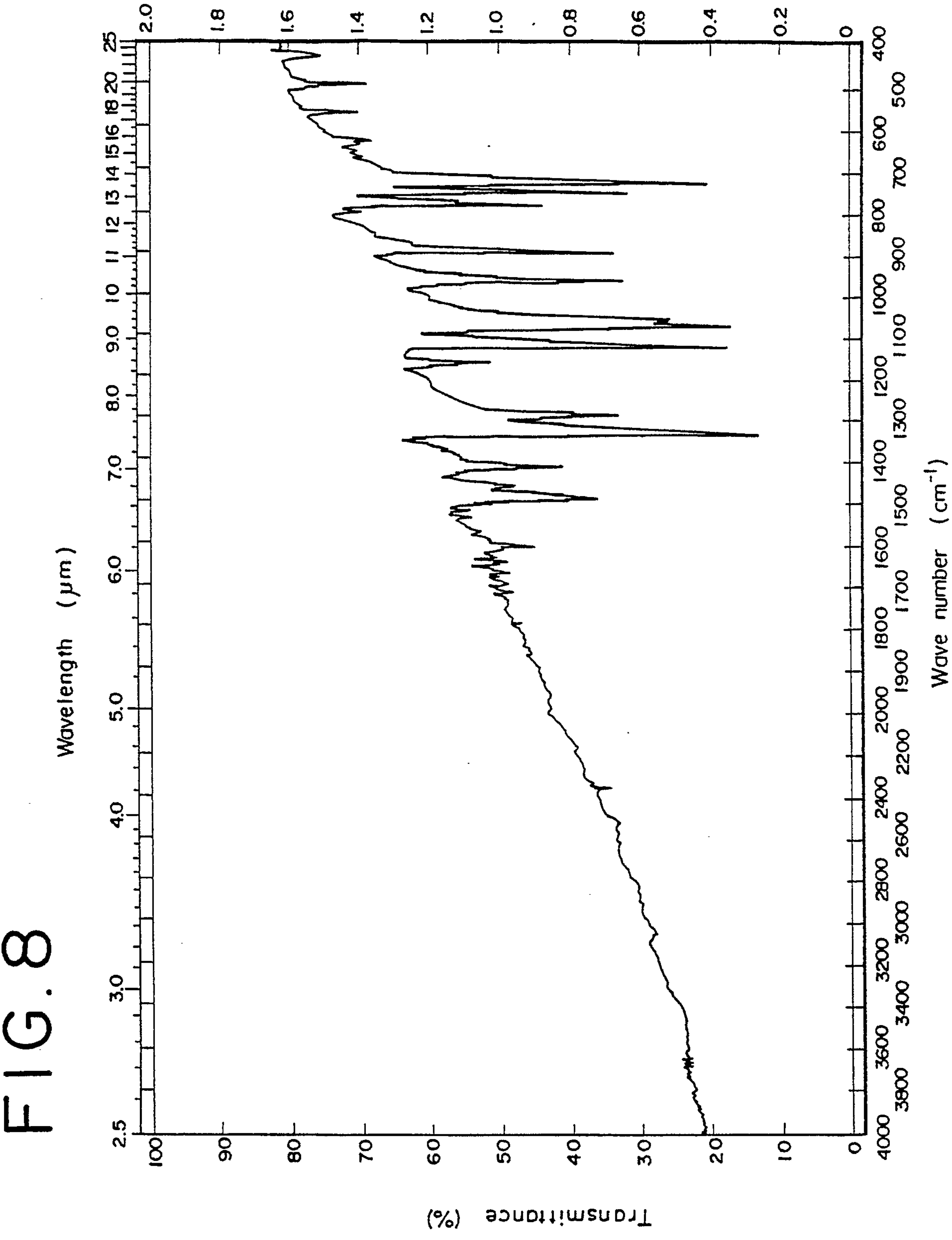
Wavelength (μm)
2.5
3.0
4.0
5.0
6.0
7.0
8.0
9.0
10
11
12
13
14
15
16
18
20
25
Wave number (cm⁻¹)
4000
3800
3600
3400
3200
3000
2800
2600
2400
2200
2000
1900
1800
1700
1600
1500
1400
1300
1200
1100
1000
900
800
700
600
500
400
Transmittance (%)
100
90
80
70
60
50
40
30
20
10
0
2.0
1.8
1.6
1.4
1.2
1.0
0.8
0.6
0.4
0.2
0

FIG. 9

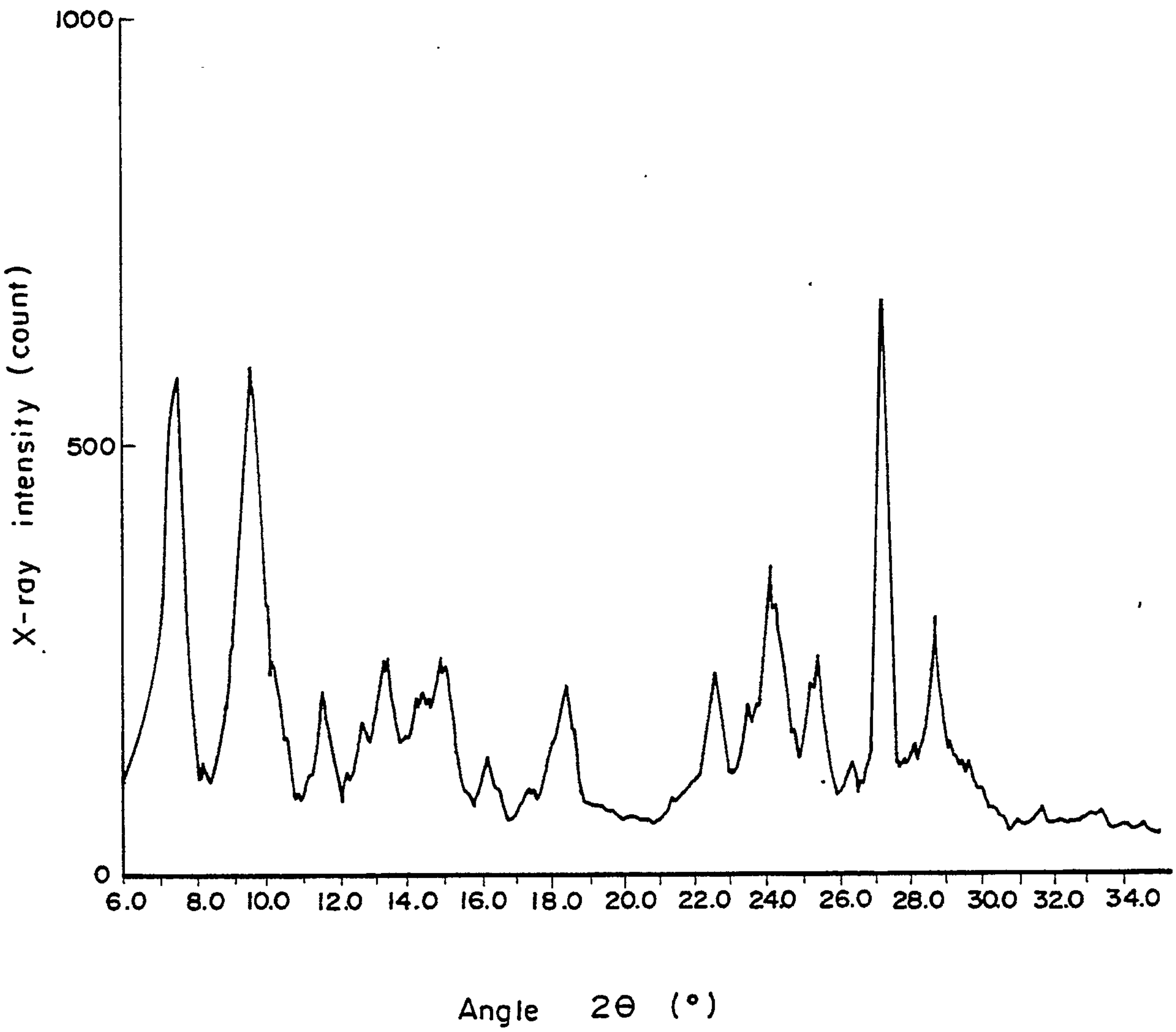
1000
500
0
X-ray intensity (count)
6.0
8.0
10.0
12.0
14.0
16.0
18.0
20.0
22.0
24.0
26.0
28.0
30.0
32.0
34.0
Angle 2θ (°)

FIG.10

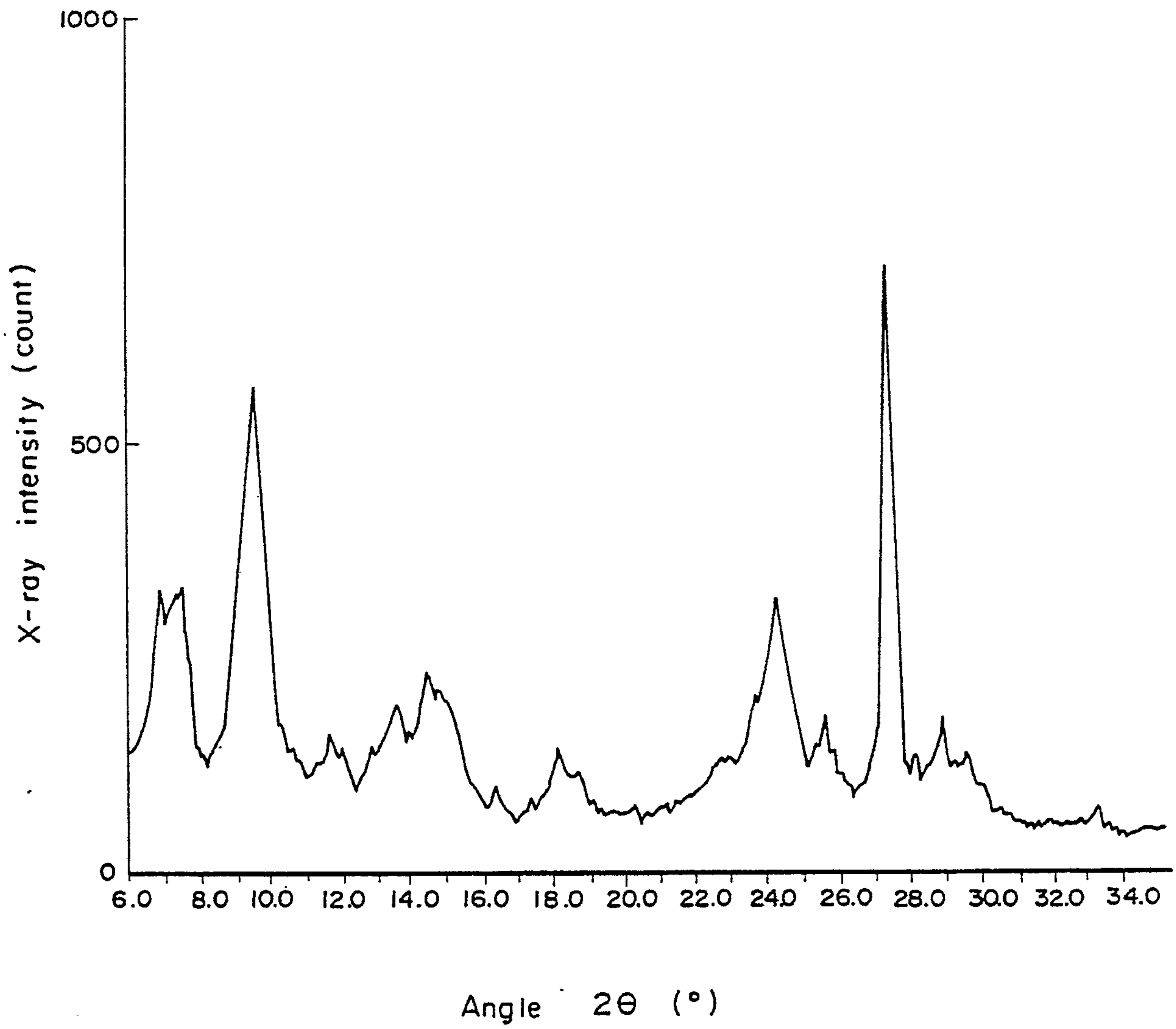
1000
500
0
X-ray intensity (count)
6.0
8.0
10.0
12.0
14.0
16.0
18.0
20.0
22.0
24.0
26.0
28.0
30.0
32.0
34.0
Angle 2θ (°)

FIG. 11

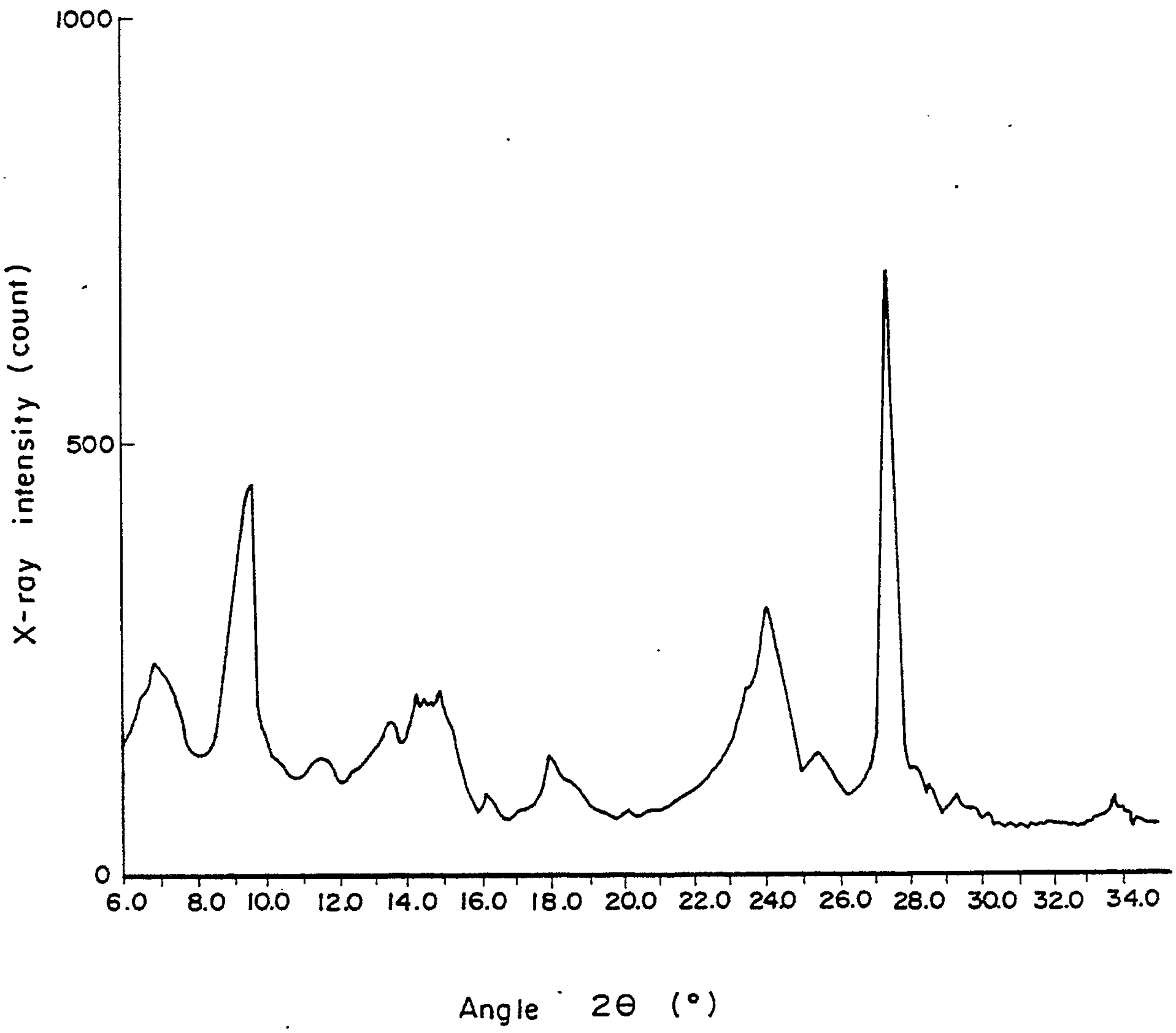
1000
500
0
X-ray intensity (count)
6.0
8.0
10.0
12.0
14.0
16.0
18.0
20.0
22.0
24.0
26.0
28.0
30.0
32.0
34.0
Angle 2θ (°)

FIG.12

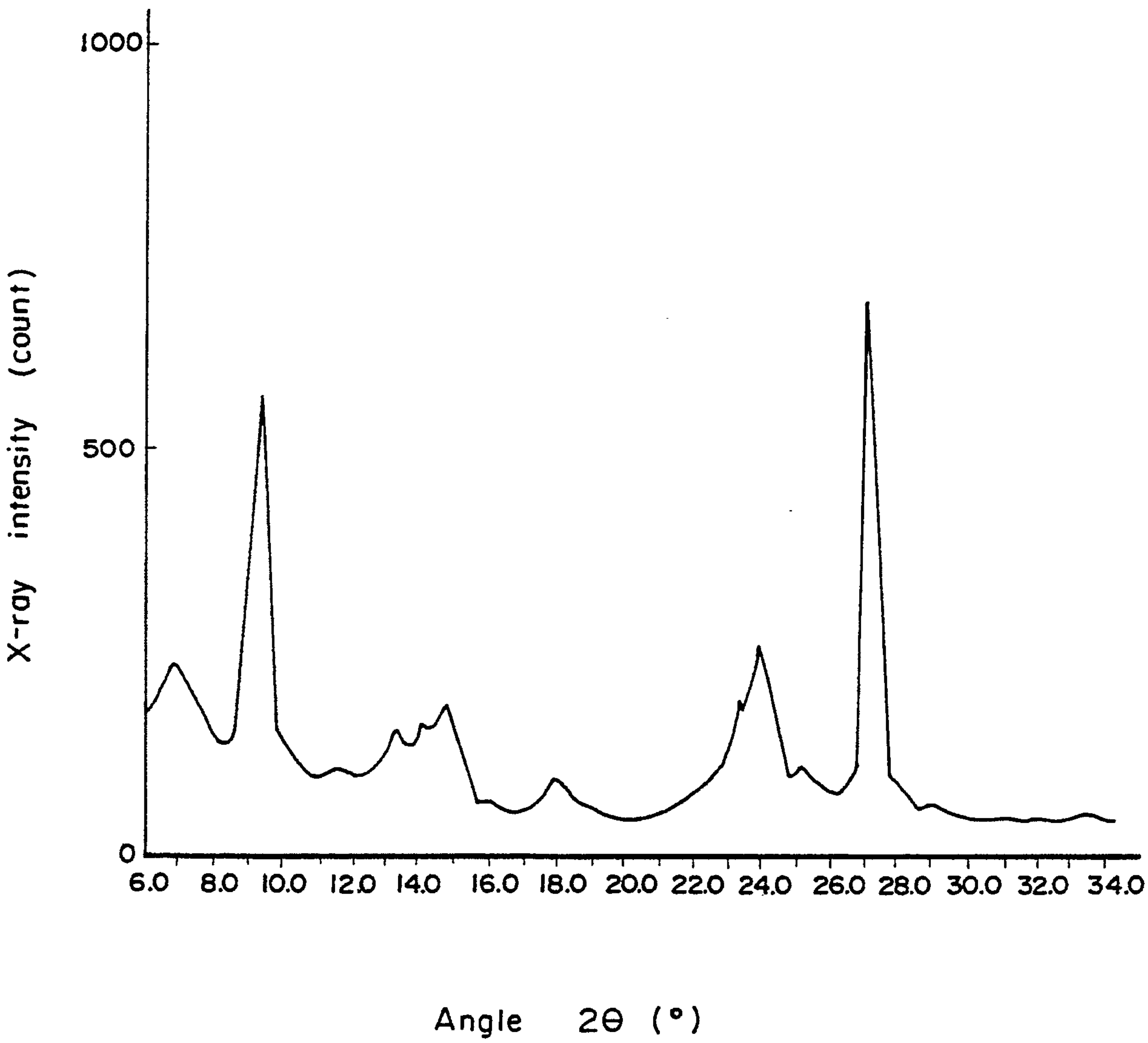
1000
500
0
X-ray intensity (count)
6.0
8.0
10.0
12.0
14.0
16.0
18.0
20.0
22.0
24.0
26.0
28.0
30.0
32.0
34.0
Angle 2θ (°)

FIG.13

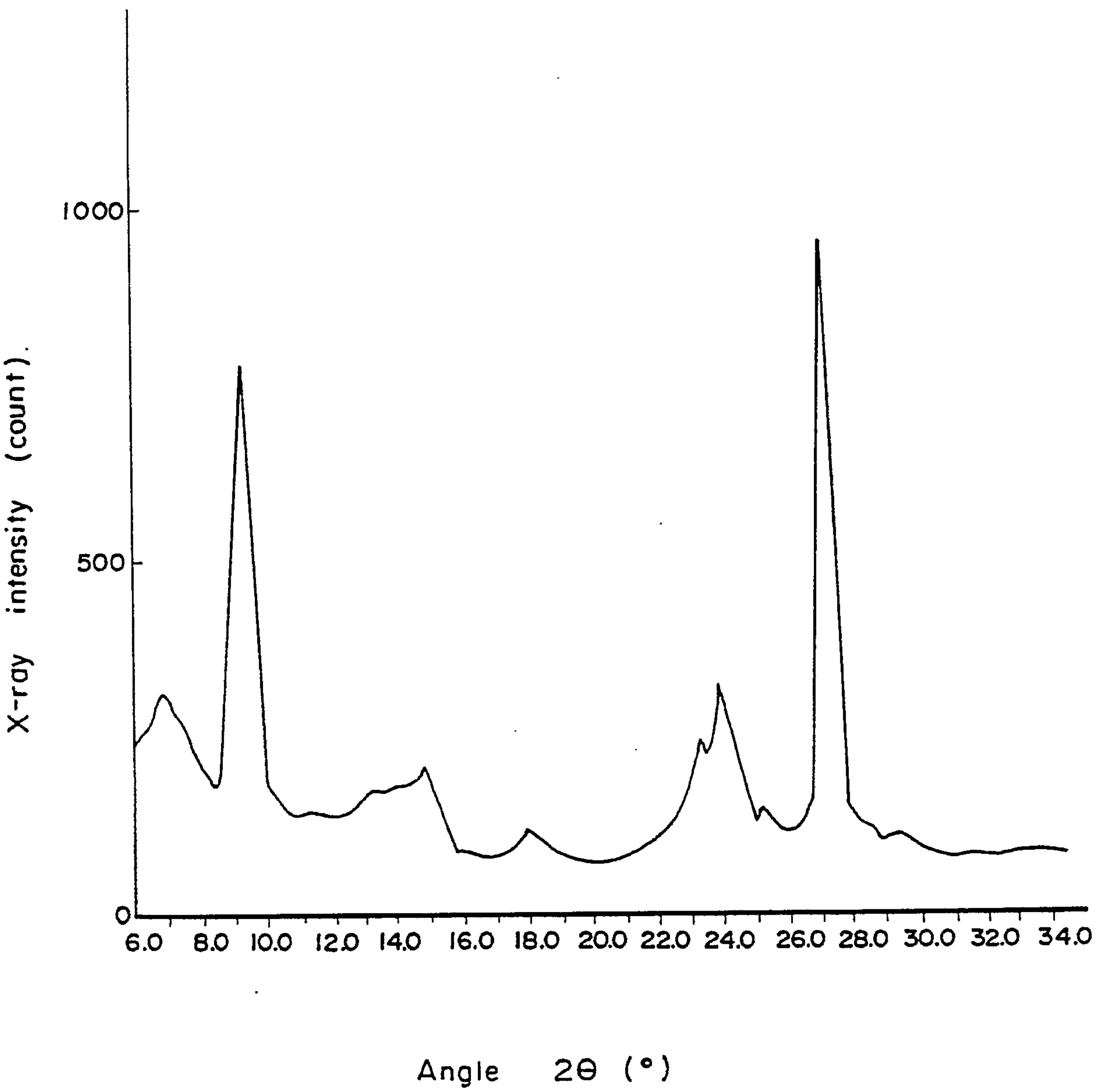
X-ray intensity (count)
1000
500
0
6.0
8.0
10.0
12.0
14.0
16.0
18.0
20.0
22.0
24.0
26.0
28.0
30.0
32.0
34.0
Angle 2θ (°)

FIG.14

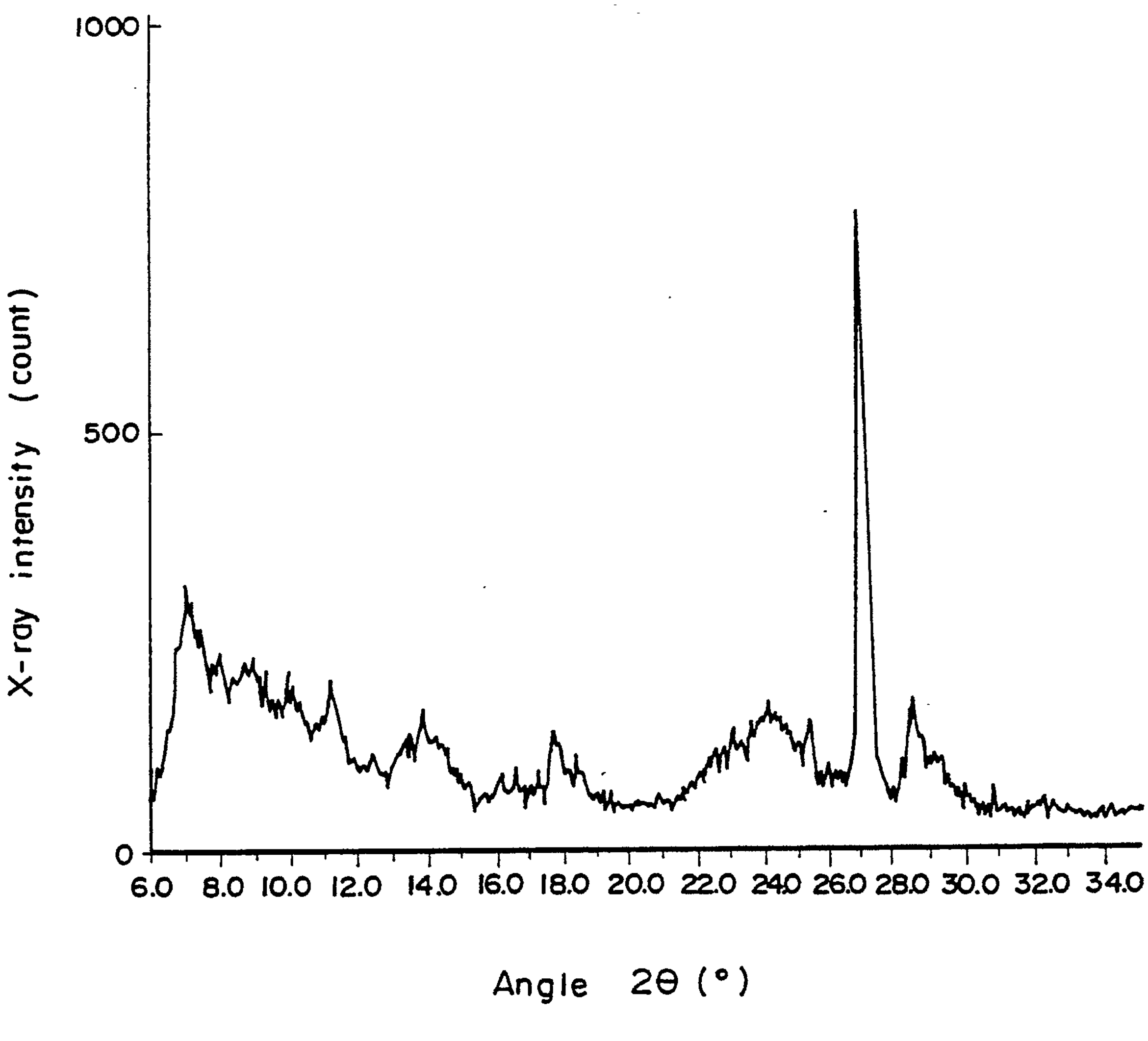
1000
500
0
X-ray intensity (count)
6.0 8.0 10.0 12.0 14.0 16.0 18.0 20.0 22.0 24.0 26.0 28.0 30.0 32.0 34.0
Angle 2θ (°)

FIG. 15

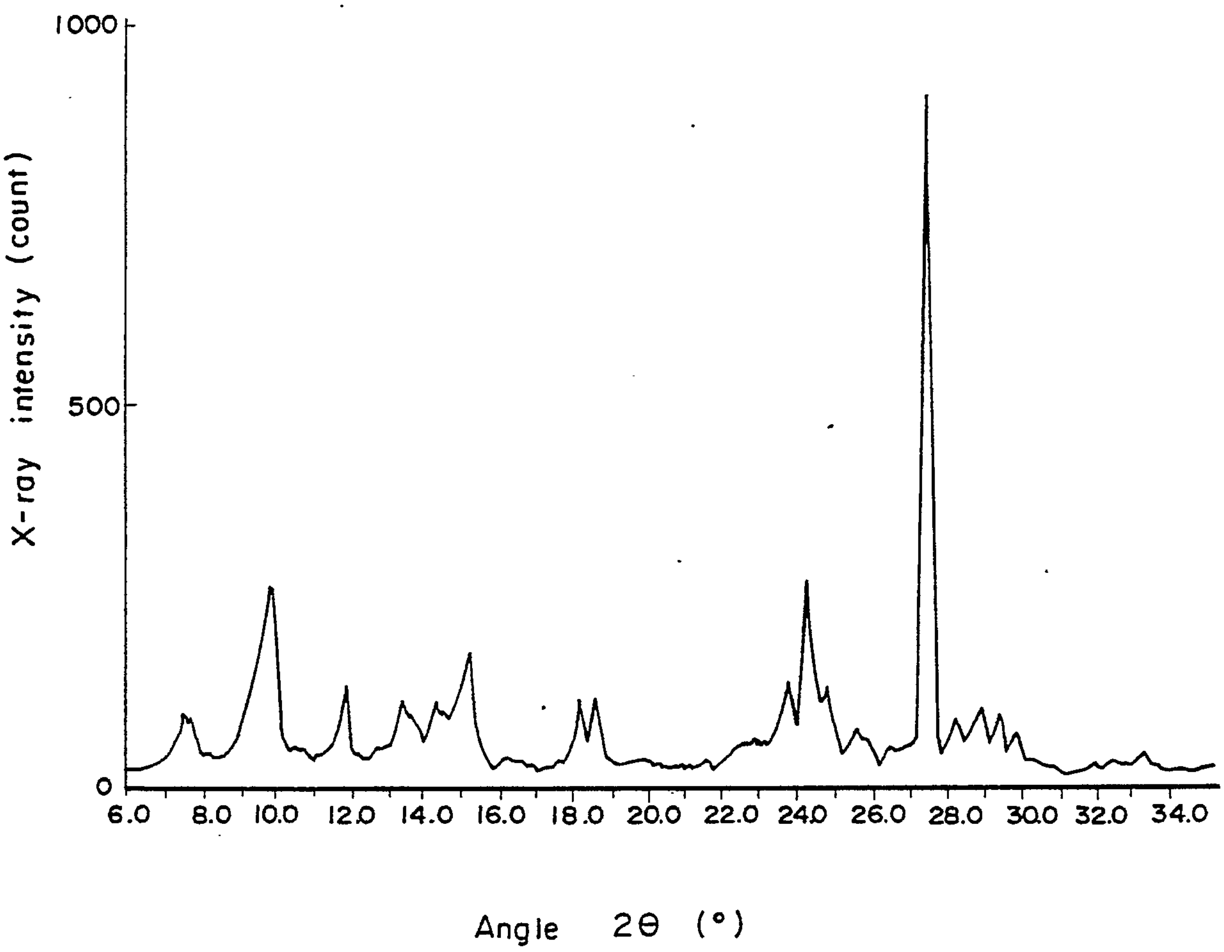
1000
500
0
X-ray intensity (count)
6.0
8.0
10.0
12.0
14.0
16.0
18.0
20.0
22.0
24.0
26.0
28.0
30.0
32.0
34.0
Angle 2θ (°)

FIG. 16

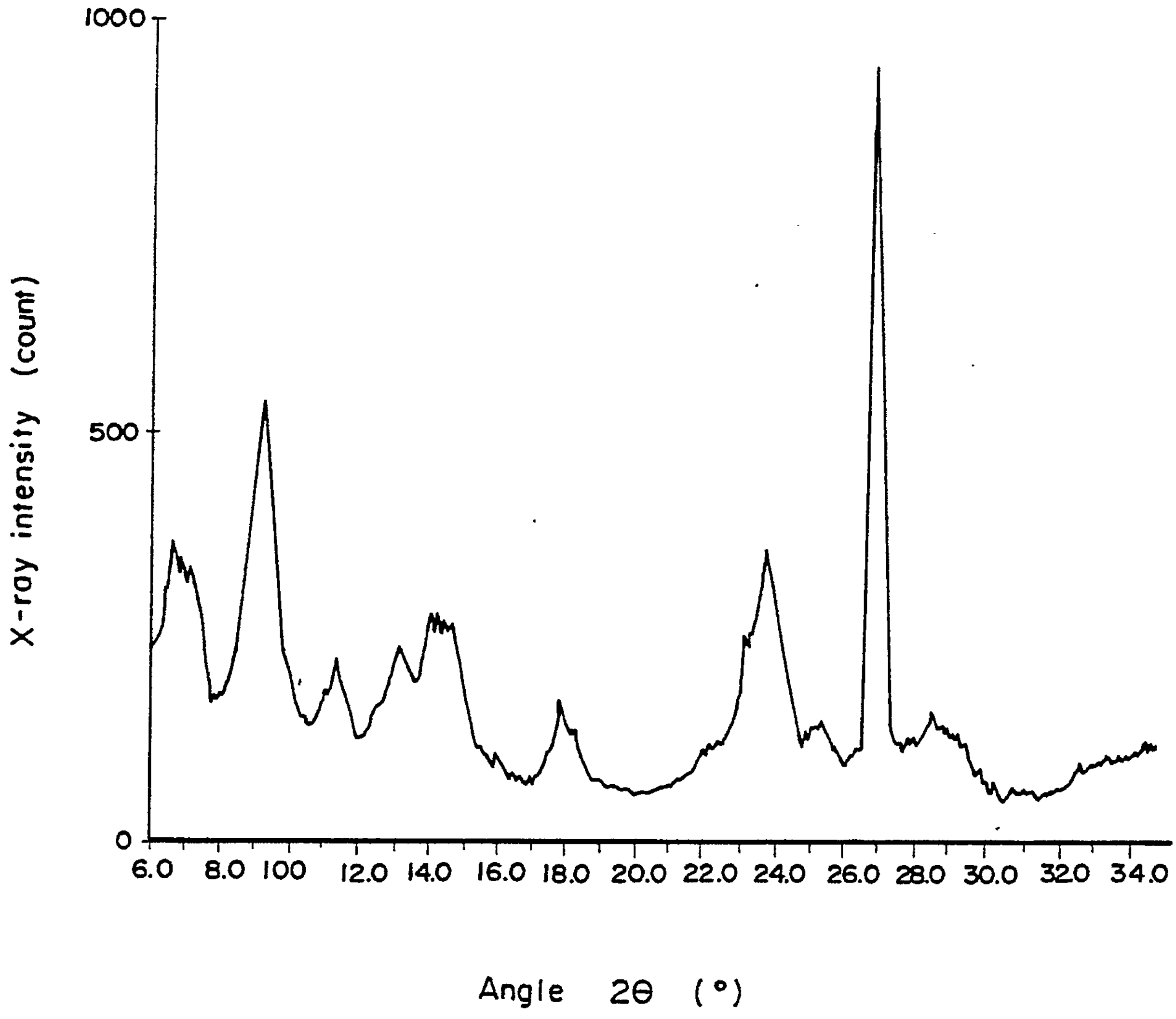
1000
500
0
X-ray intensity (count)
6.0
8.0
100
12.0
14.0
16.0
18.0
20.0
22.0
24.0
26.0
28.0
30.0
32.0
34.0
Angle 2θ (°)

FIG.17